# EUROPEAN PATENT APPLICATION

(11) **EP 4 625 128 A1**
(43) Date of publication of application: **01.10.2025**
(21) Application number: 22966491.7
(22) Date of filing: 24.11.2022
(51) Int. Cl.: G06F 3/04883

(54) **INFORMATION PROCESSING DEVICE AND CONTROL METHOD**

(71) Applicant: Lenovo (Singapore) Pte. Ltd., Singapore 556741 (SG)
(72) Inventor: YAO Qiang, Yokohama-shi, Kanagawa 220-0012 (JP); VU Tran Minh Khuong, Yokohama-shi, Kanagawa 220-0012 (JP)
(74) Representative: Openshaw & Co.
(86) International application number: PCT/JP2022/043334
(87) International publication number: WO 2024/111081

(57) **Abstract**

An information processing device includes: an input unit capable of detecting handwritten input; a display unit capable of displaying a trajectory of the handwritten input; a text recognition unit which recognizes text based on the handwritten input detected by the input unit; a prediction processing unit which predicts a text candidate following the text based on the text recognized by the text recognition unit; a handwriting synthesis unit which synthesizes the text candidate predicted by the prediction processing unit into handwritten characters; and an approval processing unit which displays, on the display unit, display information indicative of the text candidate predicted by the prediction processing unit, and when the input unit accepts an approval operation to approve the text candidate, the approval processing unit displays, on the display unit, the handwritten characters synthesized by the handwriting synthesis unit to correspond to the text candidate.

## Description

### Technical Field

The present invention relates to an information processing device and a control method.

### Background Art

In recent years, there is known an information processing device, such as a laptop personal computer (hereinafter called a laptop PC) or a tablet terminal, that enables handwritten input with a pen or a finger (for example, see Patent Literature 1). In this kind of information processing device, an easy-to-use user interface can be realized by handwritten input such as to deepen the understanding of a document with a handwritten note added to a text document.

### Citation List

### Patent Literature

Patent Literature 1: Japanese Unexamined Patent Application Publication (Translation of PCT Application) No. 2019-507915

### Summary of Invention

### Technical Problem

However, in such a conventional information processing device described above, there has been a problem that the input efficiency of handwritten input is low and hence productivity is low compared to text input.

The present invention has been made to solve the above problem, and it is an object thereof to provide an information processing device and a control method capable of improving the productivity of handwritten input.

### Solution to Problem

In order to solve the above problem, one aspect of the present invention is an information processing device including: an input unit capable of detecting handwritten input; a display unit capable of displaying a trajectory of the handwritten input; a text recognition unit which recognizes text based on the handwritten input detected by the input unit; a prediction processing unit which predicts a text candidate following the text based on the text recognized by the text recognition unit; a handwriting synthesis unit which synthesizes the text candidate predicted by the prediction processing unit into handwritten characters; and an approval processing unit which displays, on the display unit, display information indicative of the text candidate predicted by the prediction processing unit, and when the input unit accepts an approval operation to approve the text candidate, the approval processing unit displays, on the display unit, the handwritten characters synthesized by the handwriting synthesis unit to correspond to the text candidate.

The one aspect of the present invention may also be such that, in the information processing device mentioned above, the prediction processing unit predicts the text candidate based on an input history handwritten by a user in the past.

The one aspect of the present invention may further be such that, in the information processing device mentioned above, the prediction processing unit predicts the text candidate sentence by sentence.

Further, the one aspect of the present invention may be such that, in the information processing device mentioned above, the approval processing unit displays, on the display unit, the handwritten characters, synthesized by the handwriting synthesis unit as the display information indicative of the text candidate, with a colored line different from the trajectory of the handwritten input, and when the input unit accepts the approval operation, the approval processing unit changes the handwritten characters being displayed with the different colored line to the same color as the trajectory of the handwritten input.

Further, the one aspect of the present invention may be such that, in the information processing device mentioned above, the approval processing unit displays, on the display unit, the text candidate in a specific font as the display information indicative of the text candidate, and when the input unit accepts the approval operation, the approval processing unit changes the text candidate being displayed in the specific font to the handwritten characters.

Further, the one aspect of the present invention may be such that, in the information processing device mentioned above, the handwriting synthesis unit estimates handwritten characters handwritten by a user based on an input history handwritten by the user in the past to synthesize the text candidate into the handwritten characters.

Further, another aspect of the present invention is a control method for an information processing device including an input unit capable of detecting handwritten input and a display unit capable of displaying a trajectory of the handwritten input, the control method including: a step of causing a text recognition unit to recognize text based on the handwritten input detected by the input unit; a step of causing a prediction processing unit to predict a text candidate following the text based on the text recognized by the text recognition unit; a step of causing a handwriting synthesis unit to synthesize the text candidate predicted by the prediction processing unit into handwritten characters; and a step of causing an approval processing unit to display, on the display unit, display information indicative of the text candidate predicted by the prediction processing unit, and when the input unit accepts an approval operation to approve the text candidate, the approval processing unit displays, on the display unit, the handwritten characters synthesized by the handwriting synthesis unit to correspond to the text candidate.

### Effect of Invention

According to the present invention, the productivity of handwritten input can be improved.

### Brief Description of Drawings

FIG. 1 is an external view illustrating an example of a tablet terminal according to a first embodiment.
FIG. 2 is a diagram illustrating an example of a main hardware configuration of the tablet terminal according to the first embodiment.
FIG. 3 is a block diagram illustrating an example of the functional configuration of the tablet terminal according to the first embodiment.
FIG. 4 is a first diagram for describing an example of the operation of the tablet terminal according to the first embodiment.
FIG. 5 is a second diagram for describing the example of the operation of the tablet terminal according to the first embodiment.
FIG. 6 is a third diagram for describing the example of the tablet terminal according to the first embodiment.
FIG. 7 is a flowchart illustrating an example of the operation of the tablet terminal according to the first embodiment.
FIG. 8 is a flowchart illustrating an example of the operation of the tablet terminal according to a second embodiment.
FIG. 9 is a diagram for describing an example of the operation of the tablet terminal according to the second embodiment.
FIG. 10 is a diagram for describing a modification of the operation of the tablet terminal according to the second embodiment.

### Description of Embodiments

An information processing device and a control method according to one embodiment of the present invention will be described below with reference to the accompanying drawings.

### [First Embodiment]

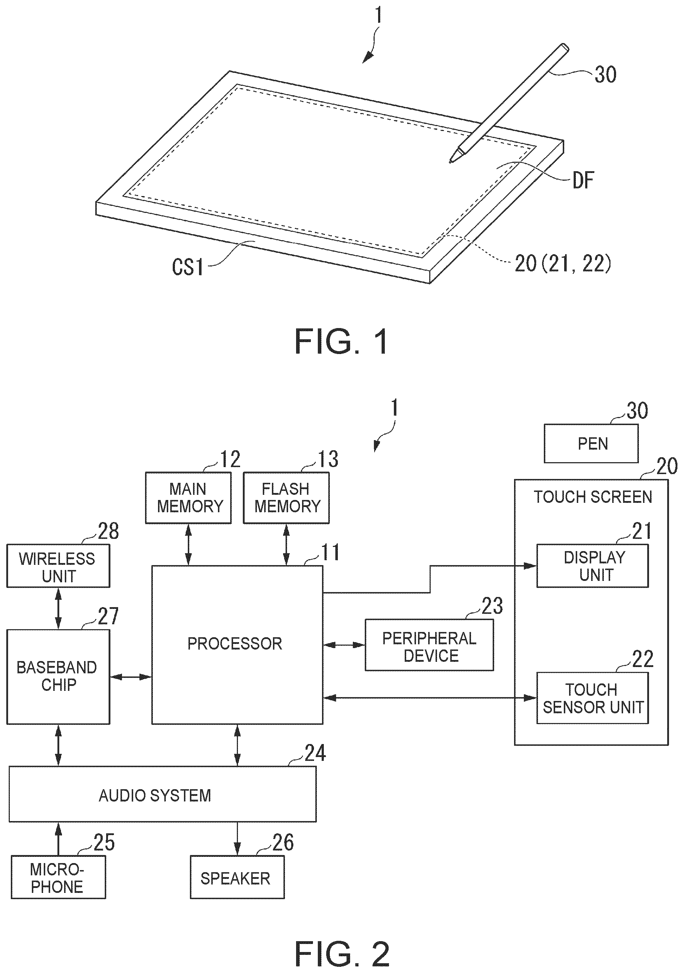

FIG. 1 is an external view illustrating an example of a tablet terminal 1 according to the present embodiment. Note that the tablet terminal 1 will be described as an example of an information processing device in the present embodiment.

As illustrated in FIG. 1, a touch screen 20 is placed on one main surface of a chassis CS1, and the tablet terminal 1 executes various processing, for example, by an application program or the like that enables handwritten input using a pen 30.

The touch screen 20 includes a display unit 21 and a touch sensor unit 22, where the display unit 21 displays various information on a display screen DF.

The touch sensor unit 22 is placed over the display unit 21 to detect that the pen 30 (an example of an operating medium) touches the display screen DF of the display unit 21, and to detect the touch position of the pen 30.

Note that the details of the touch screen 20, the display unit 21, and the touch sensor unit 22 will be described later.

Referring next to FIG. 2, a main hardware configuration of the tablet terminal 1 will be described.

FIG. 2 is a diagram illustrating an example of the main hardware configuration of the tablet terminal 1 according to the present embodiment.

As illustrated in FIG. 2, the tablet terminal 1 includes a processor 11, a main memory 12, a flash memory 13, the touch screen 20, a peripheral device 23, an audio system 24, a microphone 25, a speaker 26, a baseband chip 27, and a wireless unit 28.

The processor 11 is an application processor including, for example, a CPU (Central Processing Unit) 11. The processor 11 controls the entire tablet terminal 1.

The main memory 12 is a writable memory used as reading areas of execution programs of the processor 11 or working areas to which processed data of the execution programs are written. The main memory 12 is composed, for example, of plural DRAM (Dynamic Random Access Memory) chips. The execution programs include an OS (Operating System), various device drivers for hardware-operating peripheral devices, various services/utilities, application programs (application software), and the like.

The flash memory 13 is, for example, a flash EEPROM (Electrically Erasable Programmable Read Only Memory) that stores the OS, various drivers, various services/utilities, application programs (hereinafter, which may also be called "applications"), and various data.

The display unit 21 is, for example, a liquid crystal display or an organic EL (Electro-Luminescence) display to provide a display based on drawing data (display data) output from the processor 11.

The touch sensor unit 22 detects a touch of the pen 30 (operating medium) and the touch position on the screen of the display unit 21 (on the display screen DF). The touch sensor unit 22 can detect the position of the pen 30 on the screen, for example, by a capacitive method, an electromagnetic induction method, or the like. The touch sensor unit 22 detects detection position data (raw data) of the pen 30 at a given detection interval (sampling cycle). The touch sensor unit 22 is an example of an input unit capable of detecting handwritten input with the pen 30.

Further, the touch sensor unit 22 is internally equipped with a CPU and a storage unit such as a RAM and a ROM, which are not illustrated, and can execute various processing such as to remove noise from the detection position data of the pen 30 by the CPU executing firmware stored in the storage unit.

The audio system 24 is, for example, an audio IC (Integrated Circuit), which inputs, records, plays back, and outputs sound data. For example, the microphone 25 and the speaker 26 are connected to the audio system 24. For example, the audio system 24 outputs sound data collected by the microphone 25 to the processor 11 or the baseband chip 27. Further, for example, the audio system 24 converts sound data acquired from the processor 11 or the baseband chip 27 into a sound signal, and outputs the sound signal to the speaker 26.

The microphone 25 collects sounds around the tablet terminal 1. For example, when harmonizing sounds with another terminal, the microphone 25 collects sounds such as user's voice.

The speaker 26 outputs various sounds to the outside of the tablet terminal 1. For example, when harmonizing sounds with another terminal, the speaker 26 outputs sounds (emits sounds) received from the other terminal.

The baseband chip 27 is, for example, a dedicated IC to control wireless communication such as 4G (the 4th generation mobile communication system) or 5G (the 5th generation mobile communication system). The baseband chip 27 outputs voice data received, for example, by using the wireless unit 28 to the speaker 26 through the audio system 24. Further, for example, the baseband chip 27 acquires sound data collected from the microphone 25 through the audio system 24, and outputs the sound data using the wireless unit 28 through the mobile communication system. Further, the baseband chip 27 performs data communication with the processor 11 on input/output data of data communication through the mobile communication system.

The wireless unit 28 is a wireless communication device including an antenna for performing wireless communication through the mobile communication system.

The pen 30 is a pen-shaped operating medium such as a touch pen or a stylus pen. Note that the pen 30 may be configured to include, for example, a resonant circuit so that power is supplied by electromagnetic induction to a coil in the resonant circuit to be able to detect the position and angle of the pen 30 on the screen of the display unit 21 using the resonant circuit.

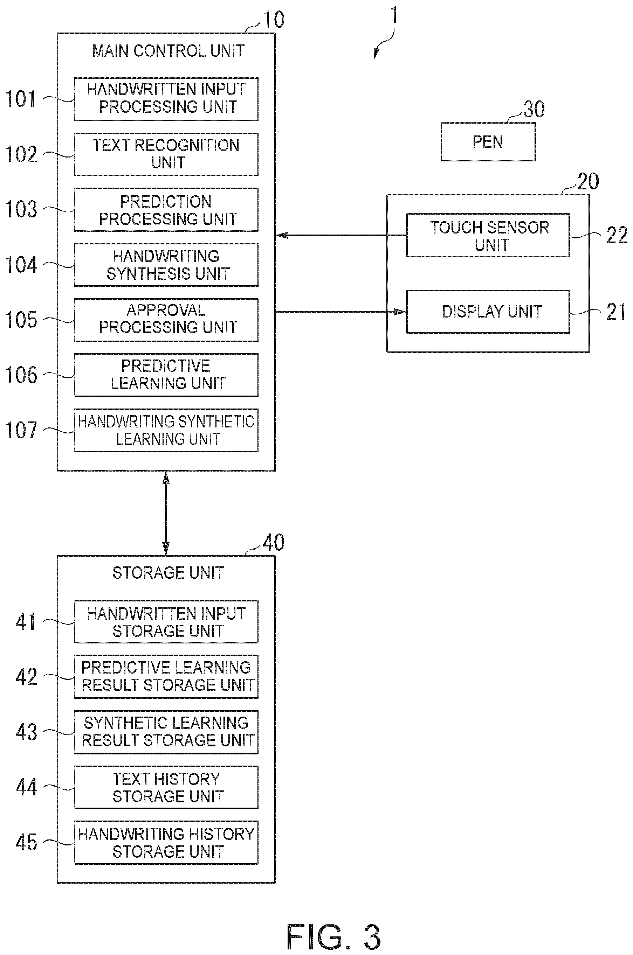

Referring next to FIG. 3, the functional configuration of the tablet terminal 1 according to the present embodiment will be described.

FIG. 3 is a block diagram illustrating an example of the functional configuration of the tablet terminal 1 according to the present embodiment.

As illustrated in FIG. 3, the tablet terminal 1 includes a main control unit 10, the touch screen 20, the pen 30, and a storage unit 40.

The touch screen 20 includes the display unit 21 and the touch sensor unit 22.

The storage unit 40 is, for example, a storage unit realized by the main memory 12 or the flash memory 13. The storage unit 40 includes a handwritten input storage unit 41, a predictive learning result storage unit 42, a synthetic learning result storage unit 43, a text history storage unit 44, and a handwriting history storage unit 45.

The handwritten input storage unit 41 is a storage unit realized, for example, by the main memory 12 to store handwritten input data. The handwritten input data is, for example, pen input data that is a movement trajectory of the pen 30 based on the detection position data of the pen 30 detected by the touch sensor unit 22.

The predictive learning result storage unit 42 is a storage unit realized, for example, by the flash memory 13 to store a predictive learning result (next-text predictive model). Note that the predictive learning result is a predictive model for predicting a text candidate following input text from the input text (for example, a word, part of a sentence, or the like), which is the result of being trained by machine learning based, for example, on user's past handwritten input or text input, a template sentence, and the like.

The synthetic learning result storage unit 43 is a storage unit realized, for example, by the flash memory 13 to store a synthetic learning result (handwriting synthetic model). The synthetic learning result is a synthetic model for synthesizing input text (for example, a text candidate to be described later) into user's handwritten characters, which is a result of being trained by machine learning based, for example, on user's past handwritten input.

The text history storage unit 44 is a storage unit realized, for example, by the flash memory 13 to store history information of past text input. The history information of text input stored in the text history storage unit 44 is used for training of the predictive learning result (next-text predictive model) described above.

The handwriting history storage unit 45 is a storage unit realized, for example, by the flash memory 13 to store history information of past handwritten input. The history information of text input stored in the handwriting history storage unit 45 is used for training of the synthetic learning result (handwriting synthetic model) described above.

The main control unit 10 is a functional unit implemented, for example, by the processor 11 executing a program stored in the main memory 12 or the flash memory 13 to execute various processing based on the OS (for example, Android (registered trademark) or the like). The main control unit 10 includes a handwritten input processing unit 101, a text recognition unit 102, a prediction processing unit 103, a handwriting synthesis unit 104, an approval processing unit 105, a predictive learning unit 106, and a handwriting synthetic learning unit 107.

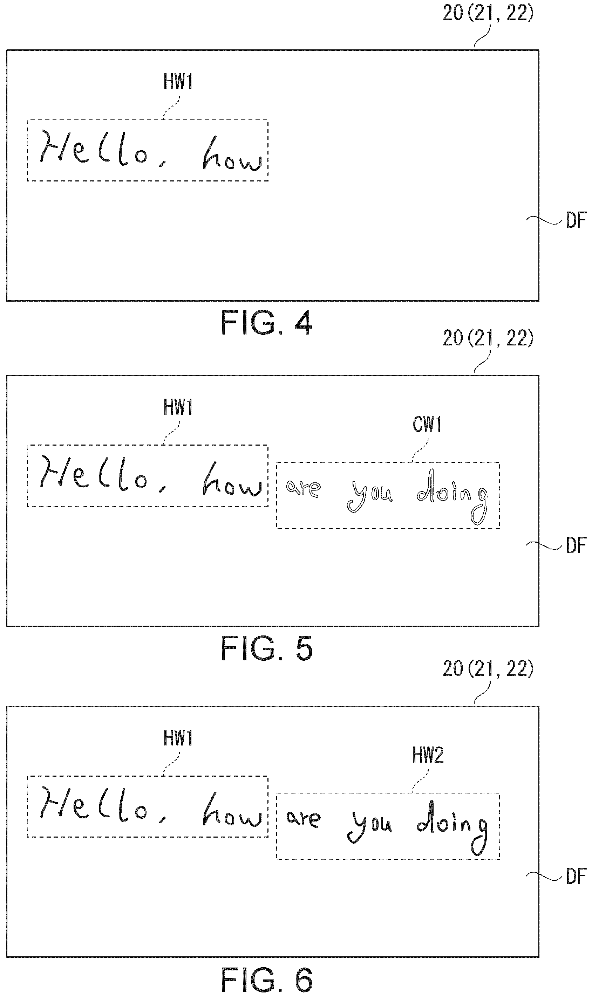

The handwritten input processing unit 101 is a functional unit implemented, for example, by the processor 11 executing a program stored in the main memory 12 or the flash memory 13 to execute handwritten input processing. The handwritten input processing unit 10 acquires, from the touch sensor unit 22 of the touch screen 20, detection position data of the operating medium such as the pen 30, and displays, on the display unit 21, a movement trajectory of the pen 30 (handwritten input) based on the acquired detection position data. The handwritten input processing unit 101 displays the movement trajectory of the pen 30 (handwritten input), for example, as illustrated in FIG. 4.

FIG. 4 is a first diagram for describing an example of the operation of the tablet terminal 1 according to the present embodiment. In FIG. 4, an example in which the tablet terminal 1 displays, on the display unit 21, the movement trajectory of the pen 30 handwritten by the user is illustrated.

In FIG. 4, handwritten input HW1 when "Hello, how" is handwritten by the user is illustrated.

Returning to the description of FIG. 3, the handwritten input processing unit 101 stores data on the handwritten input in the handwritten input storage unit 41.

The text recognition unit 102 is a functional unit implemented, for example, by the processor 11 executing a program stored in the main memory 12 or the flash memory 13 to recognize text based on the handwritten input detected by the touch sensor unit 22. The text recognition unit 102 converts data on the handwritten input to text data, for example, using known handwritten-character recognition technology.

Further, the text recognition unit 102 stores, in the handwriting history storage unit 45, the handwritten input data and the converted text data in association with each other as the history information of handwritten input. Further, the text recognition unit 102 stores, as history information of text input, the converted text data in the text history storage unit 44.

The prediction processing unit 103 is a functional unit implemented, for example, by the processor 11 executing a program stored in the main memory 12 or the flash memory 13 to predict a text candidate following the text based on the text recognized by the text recognition unit 102. The prediction processing unit 103 predicts a text candidate to be input next based on the text recognized by the text recognition unit 102, for example, using the predictive learning result (next-text predictive model) stored in the predictive learning result storage unit 42.

In other words, the prediction processing unit 103 predicts a text candidate based on the input history handwritten by the user in the past.

Note that the prediction processing unit 103 may predict the text candidate word by word, or may predict the text candidate sentence by sentence. Further, the prediction processing unit 103 may predict the text candidate character by character, phrase by phrase, or numeric string by numeric string (for example, in the case of a telephone number), or the like. In other words, the text candidate may be any other content including numbers, symbols, characters, phrases, or sentences.

The handwriting synthesis unit 104 is a functional unit implemented, for example, by the processor 11 executing a program stored in the main memory 12 or the flash memory 13 to synthesize the text candidate (the content of the text candidate) predicted by the prediction processing unit 103 into handwritten characters. The handwriting synthesis unit 104 synthesizes the text candidate predicted by the prediction processing unit 103 into the handwritten characters using the synthetic learning result (handwriting synthetic model) stored in the synthetic learning result storage unit 43.

In other words, the handwriting synthesis unit 104 estimates handwritten characters handwritten by the user based on the input history handwritten by the user in the past to synthesize the text candidate into the handwritten characters. Further, the style of the synthesized handwritten characters here is a style selected by the user or a style similar to user's typeface.

Note that the handwriting synthesis unit 104 may also execute handwriting synthesis processing in parallel with processing of the prediction processing unit 103 to be described later.

The approval processing unit 105 is a functional unit implemented, for example, by the processor 11 executing a program stored in the main memory 12 or the flash memory 13 to display, on the display unit 21, display information indicative of the text candidate predicted by the prediction processing unit 103. The approval processing unit 105 displays, on the display unit 21, the handwritten characters synthesized by the handwriting synthesis unit 104, for example, as the display information indicative of the text candidate with a colored line different from the trajectory of the handwritten input. For example, as illustrated in FIG. 5, the approval processing unit 105 displays, on the display unit 21, the handwritten characters of the text candidate with a gray line.

FIG. 5 is a second diagram for describing the example of the operation of the tablet terminal 1 according to the present embodiment. In FIG. 5, the example in which the approval processing unit 105 of the tablet terminal 1 displays the handwritten characters of the text candidate on the display unit 21 is illustrated.

In FIG. 5, a handwritten input candidate CW1 illustrates "are you doing" as a next handwritten input candidate predicted with respect to the handwritten input HW1 ("Hello, how") handwritten by the user.

As illustrated in FIG. 5, the approval processing unit 105 displays the handwritten input candidate CW1, for example, with the gray line. Note that when displaying the handwritten input candidate CW1, the approval processing unit 105 may also display the handwritten input candidate CW1 with any other colored line instead of the gray line, by changing the line type such as to a dotted line, by making the display blink, or the like.

Further, when displaying the handwritten input candidate CW1, the approval processing unit 105 checks the position and size of the handwritten input candidate CW1 to be displayed based on a bounding box of the handwritten input HW1 to display the handwritten input candidate CW1 in the right position and size. Here, the bounding box of the handwritten input HW1 is a box-shaped (rectangular) display area surrounding the handwritten input HW1.

Returning to the description of FIG. 3 again, when the touch sensor unit 22 accepts an approval operation to approve the text candidate, the approval processing unit 105 displays, on the display unit 21, the handwritten characters synthesized by the handwriting synthesis unit 104 to correspond to the text candidate. For example, as illustrated in FIG. 6, the approval processing unit 105 displays, on the display unit 21, the handwritten characters of the text candidate, for example, by performing an operation to tap the display of the text candidate (for example, the handwritten input candidate CW1 in FIG. 5) with the pen 30 or a finger.

FIG. 6 is a third diagram for describing the example of the operation of the tablet terminal 1 according to the present embodiment. In FIG. 6, a display example when the approval processing unit 105 accepts the approval operation to approve the text candidate is illustrated.

In FIG. 6, handwritten input HW2 indicates that the handwritten input candidate CW1 is approved, and hence becomes a line of formal handwritten input. When the approval operation is accepted, the handwritten input HW2 is changed from the gray line to a black line. In other words, the approval processing unit 105 changes the gray line of the handwritten input candidate CW1 to the black line to display the handwritten input HW2. Further, the approval processing unit 105 stores the handwritten input HW2 in the handwritten input storage unit 41 as the formal handwritten input.

Thus, the approval processing unit 105 displays, on the display unit 21, the handwritten characters synthesized by the handwriting synthesis unit 104 as the display information indicative of the text candidate with a colored line (for example, a gray line) different from that of the trajectory of handwritten input, and when the touch sensor unit 22 accepts the approval operation, the handwritten characters being displayed with the different colored line (for example, a black line) are changed to handwritten characters with the same color as the trajectory of the handwritten input.

Returning to the description of FIG. 3 again, the predictive learning unit 106 is a functional unit implemented, for example, by the processor 11 executing a program stored in the main memory 12 or the flash memory 13. The predictive learning unit 106 executes machine learning processing to generate a predictive learning result (next-text predictive model) for predicting a text candidate based on the input history handwritten by the user in the past.

For example, the predictive learning unit 106 executes the machine learning processing using, as training data, text history information stored in the text history storage unit 44, and stores a learning result (next-text predictive model) in the predictive learning result storage unit 42.

The handwriting synthetic learning unit 107 is a functional unit implemented, for example, by the processor 11 executing a program stored in the main memory 12 or the flash memory 13. The handwriting synthetic learning unit 107 generates, by machine learning, a handwriting synthetic model for estimating and synthesizing handwritten characters handwritten by the user from text data based on the input history handwritten by the user in the past.

For example, the handwriting synthetic learning unit 107 executes machine learning processing using, as training data, history information of past handwritten input stored in the handwriting history storage unit 45, and stores a synthetic learning result (handwriting synthetic model) in the synthetic learning result storage unit 43.

For example, the predictive learning unit 106 and the handwriting synthetic learning unit 107 execute the machine learning processing regularly at specified time intervals.

Further, in the present embodiment, the text recognition unit 102, the prediction processing unit 103, the handwriting synthesis unit 104, and the approval processing unit 105 may also be functional units implemented by an application program(s), or functional units implemented as processing by the OS. Further, some of the text recognition unit 102, the prediction processing unit 103, the handwriting synthesis unit 104, and the approval processing unit 105 may be implemented as device driver processing or internal processing of the touch sensor unit 22.

Next, the operation of the tablet terminal 1 according to the present embodiment will be described with reference to a drawing.

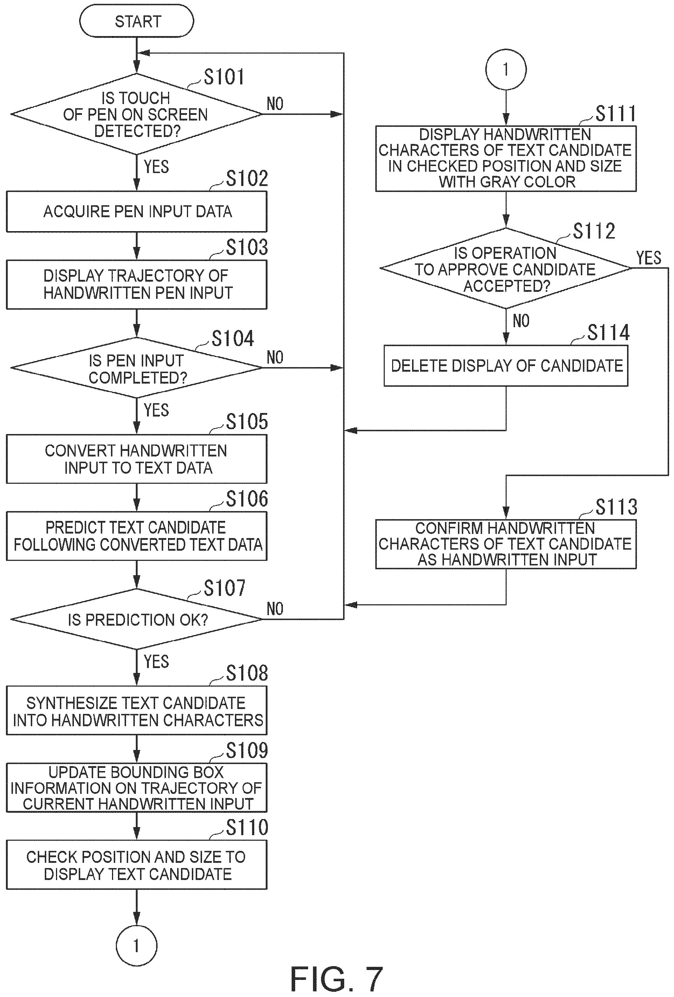

FIG. 7 is a flowchart illustrating an example of the operation of the tablet terminal 1 according to the present embodiment.

As illustrated in FIG. 7, the tablet terminal 1 first determines whether or not the touch of the pen 30 on the screen (display screen DF) is detected (step S101). The handwritten input processing unit 101 of the tablet terminal 1 determines whether or not the touch sensor unit 22 detects the touch of the pen 30 on the display screen DF. When the touch sensor unit 22 detects the touch of the pen 30 (step S101: YES), the handwritten input processing unit 101 advances the processing to step S102. On the other hand, when the touch sensor unit 22 does not detect the touch of the pen 30 (step S101: NO), the handwritten input processing unit 101 returns the processing to step S101.

In step S102, the handwritten input processing unit 101 acquires pen input data. In other words, the handwritten input processing unit 101 acquires, as the pen input data, position information of the pen 30 on the display screen DF detected by the touch sensor unit 22.

Next, the handwritten input processing unit 101 displays the trajectory of handwritten pen input (step S103). The handwritten input processing unit 101 stores, in the handwritten input storage unit 41, the acquired pen input data as handwritten pen input, and displays the trajectory of handwritten pen input on the display unit 21, for example, like the handwritten input HW1 illustrated in FIG. 4.

Next, the handwritten input processing unit 101 determines whether or not pen input is completed (step S104). When the pen input is completed (step S104: YES), the handwritten input processing unit 101 advances the processing to step S105. On the other hand, when the pen input is not completed (step S104: NO), the handwritten input processing unit 101 returns the processing to step S101.

In step S105, the tablet terminal 1 converts the handwritten input to text data (text information). For example, the text recognition unit 102 of the tablet terminal 1 converts the handwritten input HW1 illustrated in FIG. 4 to text data as "Hello, how." The text recognition unit 102 stores, in the handwriting history storage unit 45, data on the handwritten input and the converted text data in association with each other as history information of handwritten input. Further, the text recognition unit 102 stores, in the text history storage unit 44, the converted text data as history information of text input.

Next, the tablet terminal 1 predicts a text candidate following the converted text data (step S106). The prediction processing unit 103 of the tablet terminal 1 predicts the text candidate following the text data converted by the text recognition unit 102 using, for example, a predictive learning result (next-text predictive model) stored in the predictive learning result storage unit 42.

Next, the prediction processing unit 103 determines whether or not the prediction is OK (the prediction is completed successfully) (step S107). When the prediction is OK (the prediction is completed successfully) (step S107: YES), the prediction processing unit 103 advances the processing to step S108. On the other hand, when the prediction is not OK (the prediction is not completed successfully) (step S107: NO), the prediction processing unit 103 returns the processing to step S101.

Next, in step S108, the tablet terminal 1 synthesizes the text candidate into handwritten characters. The handwriting synthesis unit 104 of the tablet terminal 1 synthesizes the text candidate predicted by the prediction processing unit 103 into handwritten characters using the synthetic learning result (handwriting synthetic model) stored in the synthetic learning result storage unit 43.

Next, the tablet terminal 1 updates bounding box information on the trajectory of the current handwritten input (step S109). For example, the approval processing unit 105 of the tablet terminal 1 updates the position and size of the bounding box of the handwritten input HW1 (the box-shaped (rectangular) display area surrounding the handwritten input HW1) illustrated in FIG. 4.

Next, the approval processing unit 105 checks the position and size to display the text candidate (step S110). For example, the approval processing unit 105 checks the position and size of the handwritten input candidate CW1 to be displayed based on the position and size of the updated bounding box of the handwritten input HW1.

Next, the approval processing unit 105 displays the handwritten characters of the text candidate in the checked position and size with a gray color (step S111). The approval processing unit 105 displays, on the display unit 21, the handwritten characters of the text candidate with the gray color, for example, like the handwritten input candidate CW1 illustrated in FIG. 5.

Next, the approval processing unit 105 determines whether or not an operation (approval operation) to approve the candidate is accepted (step S112). The approval processing unit 105 determines whether or not an operation of tapping with the pen 30 or a finger is accepted by the touch sensor unit 22 as the approval operation. When the approval operation is accepted (step S112: YES), the approval processing unit 105 advances the processing to step S113. On the other hand, when the approval operation is not accepted (step S112: NO), the approval processing unit 105 advances the processing to step S114.

Note that, as the case where the approval operation is not accepted here, a case where the approval operation is not accepted for a specified period of time and a case where an operation not to approve the candidate is accepted are included.

In step S113, the approval processing unit 105 confirms the handwritten characters of the text candidate as handwritten input. For example, like the handwritten input HW2 illustrated in FIG. 6, the approval processing unit 105 changes the gray line of the handwritten input candidate CW1 to a black line, and displays the handwritten input HW2 on the display unit 21. Further, the approval processing unit 105 stores the handwritten characters of the text candidate in the handwritten input storage unit 41 as handwritten input. After the process in step S113, the approval processing unit 105 returns the processing to step S101.

Further, in step S114, the approval processing unit 105 deletes the display of the candidate. The approval processing unit 105 deletes the display of the handwritten input candidate CW1 to return to a display state, for example, as illustrated in FIG. 4. After the process in step S114, the approval processing unit 105 returns the processing to step S101.

As described above, the tablet terminal 1 (information processing device) according to the present embodiment includes the touch sensor unit 22 (input unit), the display unit 21, the text recognition unit 102, the prediction processing unit 103, the handwriting synthesis unit 104, and the approval processing unit 105. The touch sensor unit 22 (input unit) can detect handwritten input. The display unit 21 can display a trajectory of the handwritten input. The text recognition unit 102 recognizes text based on the handwritten input detected by the touch sensor unit 22. The prediction processing unit 103 predicts a text candidate following the text based on the text recognized by the text recognition unit 102. The handwriting synthesis unit 104 synthesizes the text candidate predicted by the prediction processing unit 103 into handwritten characters. The approval processing unit 105 displays, on the display unit 21, display information indicative of the text candidate predicted by the prediction processing unit 103, and when the touch sensor unit 22 accepts an approval operation to approve the text candidate, the approval processing unit 105 displays, on the display unit 21, the handwritten characters synthesized by handwriting synthesis unit 104 to correspond to the text candidate.

Thus, since the tablet terminal 1 (information processing device) according to the present embodiment can display the text candidate to confirm the text candidate by accepting the approval operation, the input efficiency of handwritten input can be improved, and hence the productivity of handwritten input can be improved.

Further, in the present embodiment, the prediction processing unit 103 predicts the text candidate based on input history handwritten by the user in the past.

Thus, the tablet terminal 1 according to the present embodiment can predict a suitable text candidate according to the user's past usage. Therefore, the tablet terminal 1 according to the present embodiment can further improve the productivity of handwritten input.

Further, in the present embodiment, the prediction processing unit 103 predicts the text candidate sentence by sentence.

Thus, since the tablet terminal 1 according to the present embodiment predicts the text candidate sentence by sentence, the productivity of handwritten input can further be improved.

Further, in the present embodiment, the approval processing unit 105 displays, on the display unit 21, the handwritten characters synthesized by the handwriting synthesis unit 104 as the display information indicative of the text candidate with a colored (for example, gray) line different from that of the trajectory of the handwritten input, and when the touch sensor unit 22 accepts the approval operation, the approval processing unit 105 changes the handwritten characters being displayed with the different colored line to the same color (for example, black) as that of the trajectory of the handwritten input.

Thus, since the tablet terminal 1 according to the present embodiment can clearly distinguish between the text candidate and the handwritten input confirmed with the approval operation, the productivity of handwritten input can further be improved.

Further, in the present embodiment, the handwriting synthesis unit 104 estimates handwritten characters handwritten by the user based on the input history handwritten by the user in the past to synthesize the text candidate into the handwritten characters.

Thus, since the tablet terminal 1 according to the present embodiment can display the text candidate in a state close to user's handwritten input, the text candidate can be displayed without discomfort. Therefore, the tablet terminal 1 according to the present embodiment can improve the productivity of handwritten input without discomfort.

Further, a control method according to the present embodiment is a control method for the tablet terminal 1 including the touch sensor unit 22 capable of detecting handwritten input and the display unit 21 capable of displaying a trajectory of the handwritten input, the control method including a text recognition step, a prediction processing step, a handwriting synthesis step, and an approval processing step. In the text recognition step, the text recognition unit 102 recognizes text based on handwritten input detected by the touch sensor unit 22. In the prediction processing step, the prediction processing unit 103 predicts a text candidate following the text based on the text recognized by the text recognition unit 102. In the handwriting synthesis step, the handwriting synthesis unit 104 synthesizes the text candidate predicted by the prediction processing unit 103 into handwritten characters. In the approval processing step, the approval processing unit 105 displays, on the display unit 21, display information indicative of the text candidate predicted by the prediction processing unit 103, and when the touch sensor unit 22 accepts the approval operation to approve the text candidate, the approval processing unit 105 displays, on the display unit 21, the handwritten characters synthesized by the handwriting synthesis unit 104 to correspond to the text candidate.

Thus, the control method according to the present embodiment has the same effect as the tablet terminal 1 described above to be able to improve the input efficiency of handwritten input, and hence to improve the productivity of handwritten input.

### [Second Embodiment]

Next, the tablet terminal 1 according to a second embodiment will be described with reference to the accompanying drawings. In this embodiment, a modification using text characters instead of handwritten characters to display a text candidate will be described.

Since the appearance, hardware configuration, and functional configuration of the tablet terminal 1 according to the present embodiment are the same as those in the first embodiment illustrated in FIG. 1 to FIG. 3 described above, the description thereof will be omitted here.

The approval processing unit 105 in the present embodiment displays, on the display unit 21, a text candidate in a specific font as display information indicative of the text candidate, and when the touch sensor unit 22 accepts the approval operation, the approval processing unit 105 changes the text candidate being displayed in the specific font to handwritten characters.

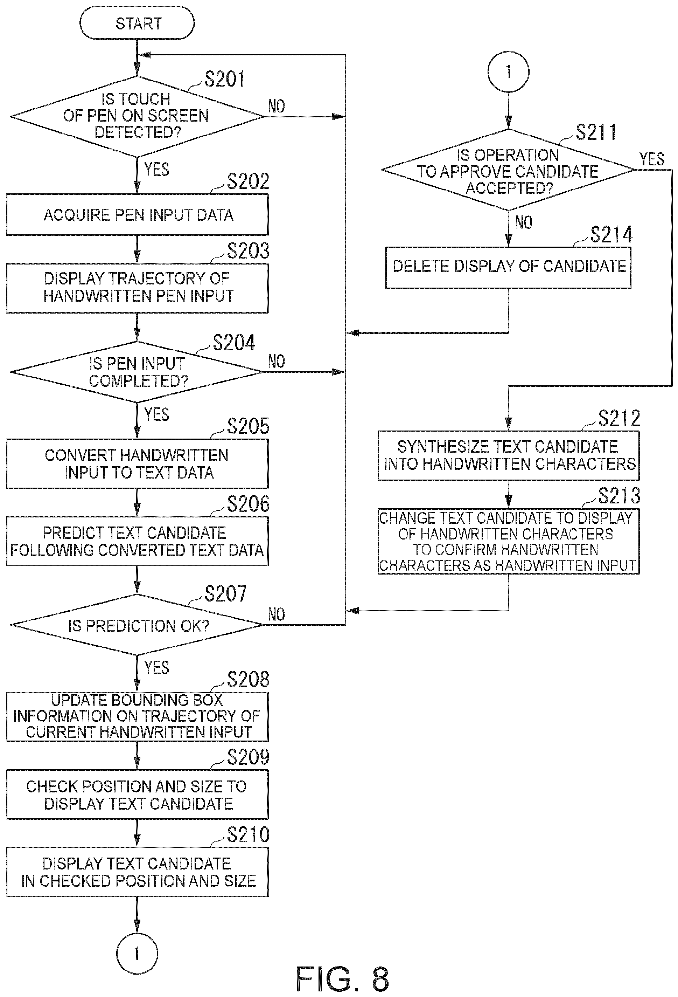

Referring next to FIG. 8, the operation of the tablet terminal 1 according to the present embodiment will be described.

FIG. 8 is a diagram illustrating an example of a main hardware configuration of the tablet terminal 1 according to the present embodiment.

In FIG. 8, since processes from step S201 to step S207 are the same as the processes from step S101 to step S107 illustrated in FIG. 7 described above, the description thereof will be omitted here.

In step S208, the tablet terminal 1 updates bounding box information on the trajectory of the current handwritten input. For example, the approval processing unit 105 of the tablet terminal 1 updates the position and size of the bounding box of the handwritten input HW1 (the box-shaped (rectangular) display area surrounding the handwritten input HW1) illustrated in FIG. 4.

Next, the approval processing unit 105 checks the position and size to display the text candidate (step S209). For example, the approval processing unit 105 checks the position and size to display the text candidate based on the position and size of the updated bounding box of the handwritten input HW1.

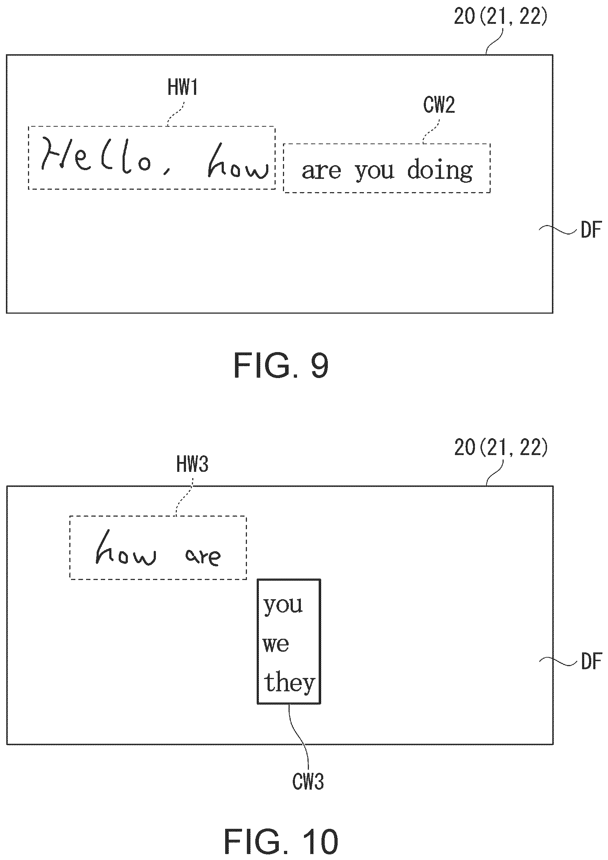

Next, the approval processing unit 105 displays the text candidate in the checked position and size (step S210). The approval processing unit 105 displays, on the display unit 21, the text candidate, for example, like a handwritten input candidate CW2 illustrated in FIG. 9. Referring here to FIG. 9, the display of a text candidate according to the present embodiment will be described.

FIG. 9 is a diagram for describing an example of the operation of the tablet terminal 1 according to the present embodiment. In the present embodiment, the approval processing unit 105 provides a display illustrated in FIG. 9 instead of the display illustrated in FIG. 5.

In FIG. 9, the handwritten input candidate CW2 illustrates "are you doing" as the next handwritten input candidate predicted with respect to the handwritten input HW1 ("Hello, how") handwritten by the user.

As illustrated in FIG. 9, the approval processing unit 105 displays, on the display unit 21, the handwritten input candidate CW2, for example, by text characters in a specific font.

Returning to the description of FIG. 8, the approval processing unit 105 next determines whether or not an operation (approval operation) to approve the candidate is accepted (step S211). The approval processing unit 105 determines whether or not an operation of tapping with the pen 30 or a finger is accepted by the touch sensor unit 22 as the approval operation. When the approval operation is accepted (step S211: YES), the approval processing unit 105 advances the processing to step S212. On the other hand, when the approval operation is not accepted (step S211: NO), the approval processing unit 105 advances the processing to step S214.

In step S212, the tablet terminal 1 synthesizes the text candidate into handwritten characters. The handwriting synthesis unit 104 of the tablet terminal 1 synthesizes the text candidate, predicted by the prediction processing unit 103 and for which the approval operation is accepted, into handwritten characters using a synthetic learning result (handwriting synthetic model) stored in the synthetic learning result storage unit 43.

Next, the approval processing unit 105 changes the text candidate to the display of the handwritten characters to confirm the handwritten characters as handwritten input (step S213). The approval processing unit 105 changes the handwritten input candidate CW2 illustrated in FIG. 9 to handwritten characters (the handwritten input HW2 illustrated in FIG. 6) synthesized by the handwriting synthesis unit 104, and displays the handwritten characters on the display unit 21. Further, the approval processing unit 105 stores the synthesized handwritten characters (the handwritten input HW2 illustrated in FIG. 6) in the handwritten input storage unit 41 as handwritten input. After the process in step S213, the approval processing unit 105 returns the processing to step S201.

Further, in step S214, the approval processing unit 105 deletes the display of the candidate. The approval processing unit 105 deletes the display of the handwritten input candidate CW2 to return to a display state, for example, as illustrated in FIG. **4****.** After the process in step S214, the approval processing unit 105 returns the processing to step S201.

As described above, in the present embodiment, the approval processing unit 105 displays, on the display unit 21, the text candidate in the specific font as display information indicative of the text candidate, and when the touch sensor unit 22 accepts the approval operation, the approval processing unit 105 changes the text candidate being displayed in the specific font to handwritten characters.

Thus, the tablet terminal 1 according to the present embodiment has the same effect as that of the first embodiment described above to be able to improve the input efficiency of handwritten input, and hence to improve the productivity of handwritten input.

Further, in the tablet terminal 1 according to the present embodiment, since the text candidate is displayed in the specific font on the display unit 21, the handwritten characters can be generated behind the text candidate while the text candidate is being displayed. As a result, the tablet terminal 1 according to the present embodiment can reduce the user waiting time and can display the handwritten characters at the moment the tablet terminal 1 receives the user's approval.

Further, since the tablet terminal 1 according to the present embodiment can clearly distinguish between the text candidate and the handwritten input confirmed with the approval operation, the productivity of handwritten input can further be improved.

Note that the tablet terminal 1 (information processing device) according to the first and second embodiments described above may also be in a form below. The tablet terminal 1 (information processing device) includes: the touch sensor unit 22 capable of detecting handwritten input; the display unit 21 capable of displaying a trajectory of the handwritten input; the main memory 12 (memory) which temporarily stores a program; and the processor 11 which executes the program stored in the main memory 12. The processor 11 executes the program stored in the main memory 12 to execute text recognition processing, prediction processing, handwriting synthesis processing, and approval processing. As the text recognition processing, the processor 11 recognizes text based on handwritten input detected by the touch sensor unit 22. As the prediction processing, the processor 11 predicts a text candidate following the text based on the text recognized by the text recognition processing. As the handwriting synthesis processing, the processor 11 synthesizes the text candidate predicted by the prediction processing into handwritten characters. As the approval processing, the processor 11 displays, on the display unit 21, display information indicative of the text candidate predicted by the prediction processing, and when the touch sensor unit 22 accepts the approval operation to approve the text candidate, the processor 11 displays, on the display unit 21, the handwritten characters synthesized by the handwriting synthesis processing to correspond to the text candidate.

Thus, the tablet terminal 1 (information processing device) according to the first and second embodiments can improve the input efficiency of handwritten input, and hence can improve the productivity of handwritten input.

Note that the present invention is not limited to the aforementioned embodiments, and changes are possible without departing from the scope of the present invention.

For example, the example in which the information processing device is the tablet terminal 1 is described in the respective embodiments mentioned above, but the present invention is not limited to this example. For example, the information processing device may also be a smartphone, a laptop personal computer equipped with a tablet mode, or the like.

Further, in the respective embodiments mentioned above, the example in which the OS is Android (registered trademark) is described, but the present invention is not limited to this example, and the OS may also be any other OS such as Windows (registered trademark) or iOS (registered trademark).

Further, in the respective embodiments mentioned above, the example in which the operating medium is the pen 30 is described, but the present invention is not limited to this example, and the operating medium may also be any other operating medium such as a user's finger.

Further, in the respective embodiments mentioned above, the example in which the tablet terminal 1 displays one text candidate on the display unit 21 is described, but the present invention is not limited to this example, and the tablet terminal 1 may also display two or more text candidates on the display unit 21. In this case, the prediction processing unit 103 predicts two or more text candidates, and the approval processing unit 105 displays, on the display unit 21, two or more text predictions as illustrated in FIG. 10, synthesizes a selected text candidate into handwritten characters, and displays the handwritten characters to confirm the handwritten input. Note that the approval processing unit 105 may display the two or more text candidates in descending order from the text candidate that is most likely to be selected.

Here, FIG. 10 is a diagram for describing a modification of the operation of the tablet terminal 1 according to the second embodiment. When the prediction processing unit 103 predicts two or more text candidates, the approval processing unit 105 provides a display illustrated in FIG. 10 instead of the display illustrated in FIG. 9.

In FIG. 10, text candidates CW3 illustrate "you," "we," and "they" as two or more candidates for the next handwritten input predicted with respect to handwritten input HW3 ("How are") handwritten by the user.

As illustrated in FIG. 10, the approval processing unit 105 displays, on the display unit 21, the two or more text candidates CW3, for example, by text characters in a specific font written vertically. Further, the approval processing unit 105 may sort the two or more text candidates CW3 by probability or any other factor to display the sorted two or more text candidates CW3 on the display unit 21.

Further, in the respective embodiments mentioned above, the example in which the tablet terminal 1 includes the predictive learning unit 106 and the handwriting synthetic learning unit 107 is described, but the present invention is not limited to this example, and the tablet terminal 1 may also be configured to include either one of the predictive learning unit 106 and the handwriting synthetic learning unit 107, or configured not to include both.

Further, in the respective embodiments mentioned above, the example in which the prediction processing unit 103 predicts the text candidate(s) using the predictive learning result (next-text predictive model) is described, but the present invention is not limited to this example, and any other method may also be used such as a method of storing past inputs to predict a text candidate(s) from inputs similar to the past inputs.

Further, in the respective embodiments mentioned above, the example in which the handwriting synthesis unit 104 synthesizes handwritten characters using the synthetic learning result (handwriting synthetic model) is described, but the present invention is not limited to this example, and any other method may also be used such as a method of storing handwritten characters, handwritten by the user in the past, in the storage unit and acquiring corresponding handwritten characters to synthesize the handwritten characters.

Note that the tablet terminal 1 described above has a computer system therein. Then, a program for implementing the function of each component included in the tablet terminal 1 described above may be recorded on a computer-readable recording medium so that the program recorded on this recording medium is read into the computer system and executed to perform processing in each component included in the tablet terminal 1 described above. Here, the fact that "the program recorded on the recording medium is read into the computer system and executed" includes installing the program on the computer system. It is assumed that the "computer system" here includes the OS and hardware such as peripheral devices and the like.

Further, the "computer system" may also include two or more computers connected through networks including the Internet, WAN, LAN, and a communication line such as a dedicated line. Further, the "computer-readable recording medium" means a portable medium such as a flexible disk, a magneto-optical disk, a ROM, or a CD-ROM, or a storage device such as a hard disk built in the computer system. Thus, the recording medium with the program stored thereon may be a non-transitory recording medium such as the CD-ROM.

Further, a recording medium internally or externally provided to be accessible from a delivery server for delivering the program is included as the recording medium. Note that the program may be split into plural pieces, downloaded at different timings, respectively, and then united in each component included in the tablet terminal 1, or delivery servers for delivering respective split pieces of the program may be different from one another. Further, it is assumed that the "computer-readable recording medium" includes a medium on which the program is held for a given length of time, such as a volatile memory (RAM) inside a computer system as a server or a client when the program is transmitted through a network. The above-mentioned program may also be to implement some of the functions described above. Further, the program may be a so-called differential file (differential program) capable of implementing the above-described functions in combination with a program(s) already recorded in the computer system.

Further, some or all of the functions described above may be realized as an integrated circuit such as LSI (Large Scale Integration). Each function described above may be implemented by a processor individually, or some or all of the functions may be integrated as a processor. Further, the method of circuit integration is not limited to LSI, and it may be realized by a dedicated circuit or a general-purpose processor. Further, if integrated circuit technology replacing the LSI appears with the progress of semiconductor technology, an integrated circuit according to the technology may be used.

### Description of Reference Numerals

- 1: tablet terminal
- 10: main control unit
- 11: processor
- 12: main memory
- 13: flash memory
- 20: touch screen
- 21: display unit
- 22: touch sensor unit
- 23: peripheral device
- 24: audio system
- 25: microphone
- 26: speaker
- 27: baseband chip
- 28: wireless unit
- 30: pen
- 40: storage unit
- 41: handwritten input storage unit
- 42: predictive learning result storage unit
- 43: synthetic learning result storage unit
- 44: text history storage unit
- 45: handwriting history storage unit
- 101: handwritten input processing unit
- 102: text recognition unit
- 103: prediction processing unit
- 104: handwriting synthesis unit
- 105: approval processing unit
- 106: predictive learning unit
- 107: handwriting synthetic learning unit

## Claims

1. An information processing device comprising:
an input unit capable of detecting handwritten input;
a display unit capable of displaying a trajectory of the handwritten input;
a text recognition unit which recognizes text based on the handwritten input detected by the input unit;
a prediction processing unit which predicts a text candidate following the text based on the text recognized by the text recognition unit;
a handwriting synthesis unit which synthesizes the text candidate predicted by the prediction processing unit into handwritten characters; and
an approval processing unit which displays, on the display unit, display information indicative of the text candidate predicted by the prediction processing unit, and when the input unit accepts an approval operation to approve the text candidate, the approval processing unit displays, on the display unit, the handwritten characters synthesized by the handwriting synthesis unit to correspond to the text candidate.

2. The information processing device according to claim 1, wherein the prediction processing unit predicts the text candidate based on an input history handwritten by a user in a past.

3. The information processing device according to claim 1, wherein the prediction processing unit predicts the text candidate sentence by sentence.

4. The information processing device according to claim **1,** wherein the approval processing unit displays, on the display unit, the handwritten characters, synthesized by the handwriting synthesis unit as the display information indicative of the text candidate, with a colored line different from the trajectory of the handwritten input, and when the input unit accepts the approval operation, the approval processing unit changes the handwritten characters being displayed with the different colored line to the same color as the trajectory of the handwritten input.

5. The information processing device according to claim **1,** wherein the approval processing unit displays, on the display unit, the text candidate in a specific font as the display information indicative of the text candidate, and when the input unit accepts the approval operation, the approval processing unit changes the text candidate being displayed in the specific font to the handwritten characters.

6. The information processing device according to claim **1,** wherein the handwriting synthesis unit estimates handwritten characters handwritten by a user based on an input history handwritten by the user in a past to synthesize the text candidate into the handwritten characters.

7. A control method for an information processing device including an input unit capable of detecting handwritten input and a display unit capable of displaying a trajectory of the handwritten input, the control method comprising:
a step of causing a text recognition unit to recognize text based on the handwritten input detected by the input unit;
a step of causing a prediction processing unit to predict a text candidate following the text based on the text recognized by the text recognition unit;
a step of causing a handwriting synthesis unit to synthesize the text candidate predicted by the prediction processing unit into handwritten characters; and
a step of causing an approval processing unit to display, on the display unit, display information indicative of the text candidate predicted by the prediction processing unit, and when the input unit accepts an approval operation to approve the text candidate, the approval processing unit displays, on the display unit, the handwritten characters synthesized by the handwriting synthesis unit to correspond to the text candidate.
